# EUROPEAN PATENT APPLICATION

(11) **EP 4 498 553 A1**
(43) Date of publication of application: **29.01.2025**
(21) Application number: 24186232.5
(22) Date of filing: 03.07.2024
(51) Int. Cl.: H02J 1/08, H02J 9/06

(54) **SYSTEMS AND METHODS FOR SMART POWER MANAGEMENT IN A SECURITY SYSTEM**

(30) Priority: 24.07.2023 US 202318357882
(71) Applicant: Honeywell International Inc., Charlotte, NC 28202 (US)
(72) Inventor: DESHPANDE, Surekha, Charlotte, 28202 (US); GANESAN, Balamurugan, Charlotte, 28202 (US)
(74) Representative: Haseltine Lake Kempner LLP

(57) **Abstract**

A control panel includes a main power input, a backup power input, a plurality of power outputs for powering one or more external devices that are external to the control panel and a controller that is configured to receive a user assigned state for each of the power outputs, wherein the user assigned state includes a first state in which the corresponding power output provides main power when the main power is available and provides backup power when the main power is not available, and a second state in which the corresponding power output provides main power when the main power is available but does not provide backup power when the main power is not available. The controller is configured to control the one or more of the plurality of power outputs according to the corresponding user assigned state.

## Description

### TECHNICAL FIELD

The present disclosure relates to methods and systems for power management in a security and/or fire system, and more particularly to methods and systems for managing main power and backup power in a security and/or fire system.

### BACKGROUND

Building control systems such as security systems and fire safety systems often include a large number of individual devices that require power. When main power is available, all of the devices are typically powered by the main power. When main power is not available, backup power is often used to maintain operation of the system until the backup power expires. If the primary power is not restored before the backup power expires, the system can shut down. The can be a concern for systems such as security systems and fire safety systems. One approach to increase the longevity of the backup power is to only power critical devices with backup power while allowing non-critical devices to shut down when main power fails. What would be desirable are methods and systems for easily configuring and managing which devices of a system will be powered by main power and backup power and which devices will only be powered by main power.

### SUMMARY

The present disclosure relates to methods and systems for power management in a security and/or fire system, and more particularly to methods and systems for managing main power and backup power in a security and/or fire system. An example may be found in a control panel. The illustrative control panel includes a main power input for receiving main power from a main power supply, a backup power input for receiving backup power from a backup power supply, a plurality of power outputs for powering one or more external devices that are external to the control panel, and a controller operatively coupled to the main power input, the backup power input and the plurality of power outputs. The controller is configured to receive a user assigned state for each of one or more of the plurality of power outputs (e.g. user programmable), wherein the user assigned state is one of a first state in which the corresponding power output provides main power received at the main power input when the main power is available and provides backup power received at the backup power input when the main power is not available, and a second state in which the corresponding power output provides main power received at the main power input when the main power is available but not provide backup power received at the backup power input when the main power is not available. The controller is configured to control the one or more of the plurality of power outputs according to the corresponding user assigned state.

Another example may be found in a method of configuring a security system that includes a control panel and a plurality of security system components. The method includes displaying a user interface that allows a user to select which of a plurality of power rails of the control panel receive power when a main power supply is available but do not receive power from a backup power supply when the main power supply is not available, and which of the plurality of power rails of the control panel receive power when the main power supply is available and also receive power from the backup power supply when the main power supply is not available. For those power rails selected to receive power when the main power supply is available but not to receive power from the backup power supply when the main power supply is not available, power is applied when the main power supply is available and power from the backup power supply is not applied when the main power supply is not available. For those power rails selected to receive power when the main power supply is available and to receive power from the backup power supply when the main power supply is not available, power is applied when the main power supply is available and power is applied from the backup power supply when the main power supply is not available.

The method includes determining a first set of the plurality of security system components that need to remain powered when the main power supply is not available and a second set of the plurality of security system components that do not need to remain powered when the main power supply is not available. The first set of the plurality of security system components are field-connected to one or more power rails of the control panel designated to receive power from the backup power supply when the main power supply is not available. The second set of the plurality of security system components are field-connected to one or more power rails of the control panel designated to not receive power from the backup power supply when the main power supply is not available.

Another example may be found in a control panel. The control panel includes a main power input for receiving main power from a main power supply and a backup power input for receiving backup power from a backup power supply. The control panel includes a plurality of power rails for powering one or more external devices external to the control panel, each of the plurality of power rails is coupled with the main power input and selectably coupled with the backup power input. A controller is operatively coupled to the main power input, the backup power input and the plurality of power rails. The controller is configured to receive a user selection designating which of the plurality of power rails will be powered by the main power supply only and which of the plurality of power rails will be powered by the main power supply and by the backup power supply, and to connect the backup power input to the power rails designated by the user selection to be powered by the main power supply and the backup power supply.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram of an illustrative control panel;
Figure 2 is a schematic block diagram of a portion of the illustrative control panel of Figure 1;
Figure 3 is a schematic block diagram of an illustrative control panel;
Figure 4 is a schematic block diagram of an illustrative control panel;
Figures 5A and 5B are flow diagrams that together show an illustrative method of configuring a security system; and
Figures 6A through 6D are illustrative screen captures.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic is described in connection with an embodiment, it is contemplated that the feature, structure, or characteristic may be applied to other embodiments whether or not explicitly described unless clearly stated to the contrary.

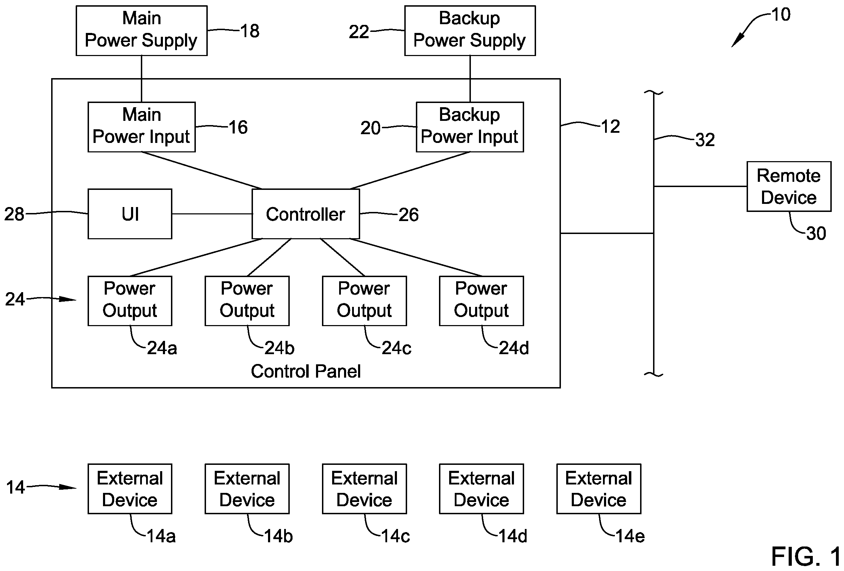

Figure 1 is a schematic block diagram showing an illustrative system 10. The illustrative system 10 includes a control panel 12 that is configured to provide power to a number of external devices 14, individually labeled as 14a, 14b, 14c, 14d and 14e. While a total of five external devices 14 are shown, this is merely illustrative, as the system 10 may include any number of external devices 14. The external devices 14 may include devices that require access to backup power at times when main power is not available. The external devices 14 may include devices that can be allowed to be without power when main power is not available, in order to conserve backup power for those devices that need to be operational at all times (e.g. devices that support critical functions of the system 10), and thus need access to backup power for times when main power is not available. Examples of external devices 14 that should have power at all times include certain security system components such as a main controller, motion sensors, door sensors, window sensors, seismic sensors and alarm sirens. Examples of external devices 14 that can be allowed to be without power when main power is not available include, for example, components such as temperature sensors and humidity sensors, lighting sensors and water level sensors.

The control panel 12 includes a main power input 16 that is configured to receive main power from a main power supply 18 (e.g. from line power). The main power input 16 may include one or more power terminals for receiving one or more power cables, for example. The main power supply 18 may be a power supply of the facility that is supported by the control panel 12. In some cases, the main power supply 18 may include a transformer that is configured to provide a low voltage power supply to the main power input 16 (e.g. 12 Volts or 24 volts). The control panel 12 includes a backup power input 20 that is configured to receive backup power from a backup power supply 22. The backup power input 20 may include one or more power terminals for receiving one or more power cables, for example. The backup power supply 22 may include one or more batteries such as rechargeable batteries that can be charged using power from the main power supply 18 when the main power supply 18 is available, and that can provide power to the backup power supply 22 during times when the main power supply 18 is not available.

The control panel 12 includes a number of power outputs 24, individually labeled as 24a, 24b, 24c and 24d. The power outputs 24 may be used for providing power to at least some of the external devices 14. While a total of four power outputs 24 are shown, it will be appreciated that this is merely illustrative, as the control panel 12 may include any number of power outputs 24. In some instances, at least some of the power outputs 24 may only provide main power when the main power supply 18 is available and do not provide backup power from the backup power supply 22 when the main power supply 18 is not available. In some instances, at least some of the power outputs 24 may provide main power from the main power input 16 when the main power supply 18 is available and may provide backup power from the backup power input 20 when the main power supply 18 is not available. In some instances, as will be discussed, the control panel 12 may be programmable by a user to configure which of the power outputs 24 provide backup power from the backup power input 20 when the main power supply 18 is not available, and which of the power outputs 24 do not provide backup power.

The control panel 12 includes a controller 26 that is operably coupled to the main power input 16, the backup power input 20 and to the power outputs 24. The controller 26 is configured to receive a user assigned state for each of the power outputs 24, wherein the user assigned state is either a first state where the corresponding power output 24 provides main power received at the main power input 16 when the main power is available and provides backup power received at the backup power input 20 when the main power is not available, or a second state where the corresponding power output 24 provides main power received at the main power input 16 when the main power is available but not provide backup power received at the backup power input 20 when the main power is not available. The control panel may include a user interface (not shown) that allows the user to program the assigned state for each of the power outputs 24. Alternatively, or in addition, the controller 26 may be programmed via a remote device 30 over a network 32. These are just examples. In any event, once programmed, the controller 26 is configured to control the power outputs 24 according to the corresponding user assigned state. In some instances, the controller 26 may be configured to receive an updated user assigned state for a selected one of the power outputs 24 (e.g. via a user interface of the control panel 12 or from the remote device 30 over the network 32) and to control the selected power output 24 according to the updated user assigned state. That is, the user assigned states assigned to the various power outputs 24 may be reprogrammed as desired.

As noted above, in some instances the control panel 12 may include a UI (User Interface) 28 that allows a user to enter information into the control panel 12, such as the user assigned state for each of the power outputs 24. In some instances, the UI 28 may be part of the control panel 12. In some instances, the UI 28 may be external to the control panel 12 but still in operative communication with the control panel 12. In some instances, the controller 26 may receive the user assigned state for at least some of the power outputs 24 from a remote device 30 over a network 32. The remote device 30 may be a computer, for example, or a smart phone. The network 32 may be a wired network or a wireless network, for example. In some instances, the control panel 12 may represent a security system control panel. In some instances, the control panel 12 may represent a smart power supply panel that is configured to provide power to various of the external devices 14, and in some cases, the control panel 12.

The control panel 12 may be configured to implement any of a variety of different maintenance functions and/or test functions. In some instances, the controller 26 may be configured to automatically enable one or more maintenance and/or test functions of the control panel 12 when the main power is available. The controller 26 may be configured to automatically disable one or more of the maintenance and/or test functions when the main power is not available. Alternatively, or in addition, the controller 26 may be configured to automatically set a backlight intensity setting and/or a volume setting to a first state when the main power is available. The controller 26 may be configured to automatically set the backlight intensity setting and/or the volume setting to a second state when the main power is not available, wherein the second state draws less power than the first state. In some cases, the second state may be OFF.

In some instances, each of the power outputs 24 may be considered as being a power rail. In some instances, the controller 26 may be configured to receive a user selection designating which of the plurality of power rails will be powered by the main power supply 18 only and which of the plurality of power rails will be powered by the main power supply 18 and by the backup power supply 22. The controller 26 may be configured to connect the backup power input 20 to the power rails designated by the user selection to be powered by the main power supply 18 and the backup power supply 22.

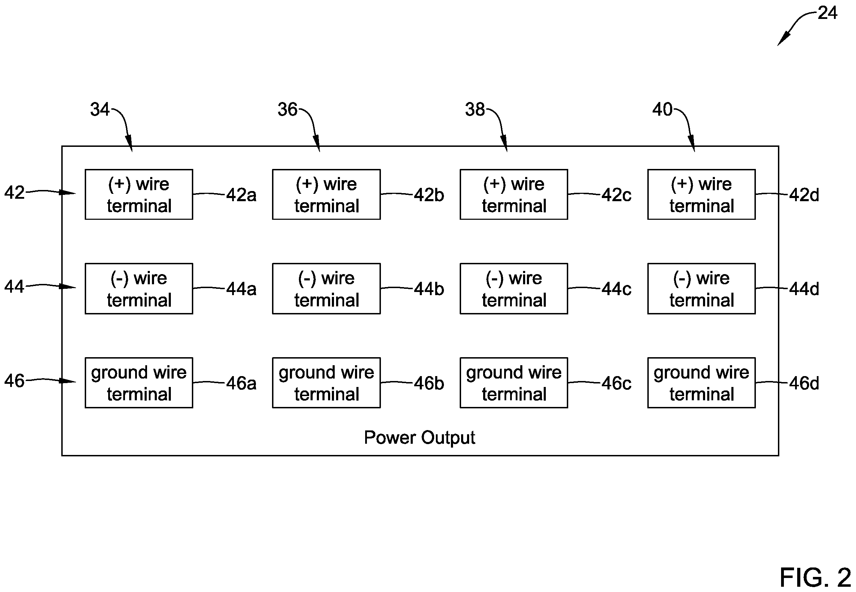

Figure 2 is a schematic block diagram of a power output 24. The power output 24, which may also be referred to as a power rail, includes a power connection 34, a power connection 36, a power connection 38 and a power connection 40, allowing a total of four of the external devices 14 to be connected to and powered by the power output 24. In some instances, the power output 24 may include any number of power connections 40. Each of the power connections 34, 36, 38 and 40 may include a positive (+) wire terminal 42, individually labeled as 42a, 42b, 42c and 42d, that is configured to receive a positive power wire from one of the external devices 14. Each of the power connections 34, 36, 38 and 40 may include a negative (-) wire terminal 44, individually labeled as 44a, 44b, 44c and 44d, that is configured to receive a negative power wire from one of the external devices 14. In some instances, each of the power connections 34, 36, 38 and 40 may include a ground wire terminal 46, individually labeled as 46a, 46b, 46c and 46d, that is configured to receive a ground wire from one of the external devices 14. In some instances, at least some of the external devices 14 may not include a separate ground wire. In some instances, each of the power outputs 24 may include a power rail that carries each of the positive (+) wire terminals 42, the negative (-) wire terminals 44 and the ground terminals 46. In some instances, the power supply wires of a selected one of the external devices 14 are connected to a selected power output 24 of the control panel 12 in accordance with a desired user assigned state of the selected power output 24 for the selected external devices 14.

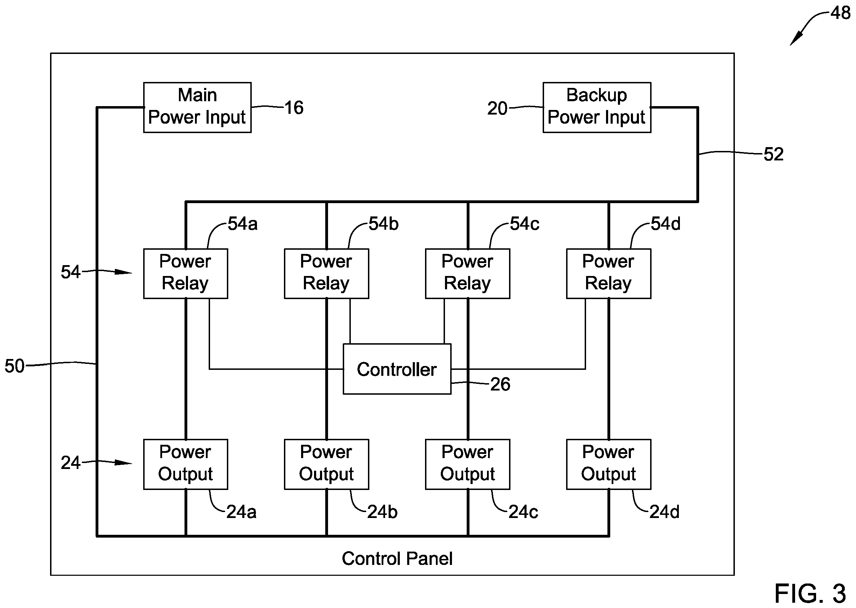

Figure 3 is a schematic block diagram showing an illustrative control panel 48. The illustrative control panel 48 may be considered as being an example of the control panel 12 (Figure 1). In some instances, features of the control panel 48 may be considered as being implemented within the control panel 12. As shown, the control panel 48 includes a main power bus 50 that extends from the main power input 16 to each of the power outputs 24. In some instances, each of the power outputs 24 may be powered by main power from the main power input 16 anytime that main power is available to the main power input 16. The control panel 48 includes a backup power bus 52 that extends from the backup power input 20 to each of a number of power relays 54, individually labeled as 54a, 54b, 54c and 54d. While the main power bus 50 and the backup power bus 52 are schematically shown as single lines, it will be appreciated that the main power bus 50 and the backup power bus 52 may each include several different conductors including a positive (+) conductor, a negative (-) conductor and in some cases a ground conductor.

Each of the power relays (or power transistors) 54 may be controlled by the controller 26, for example, such that the controller 26 determines which power relay 54 is actuated to provide backup power from the backup power input 20 to a particular power output 24. This allows the controller 26 to provide backup power from the backup power input 20 to the power outputs 24 that have been designated by the user as being powered by the main power supply 18 (Figure 1) and the backup power supply 22 (Figure 1). Others of the power outputs 24 receive main power from the main power input 16 but do not receive backup power from the backup power input 20.

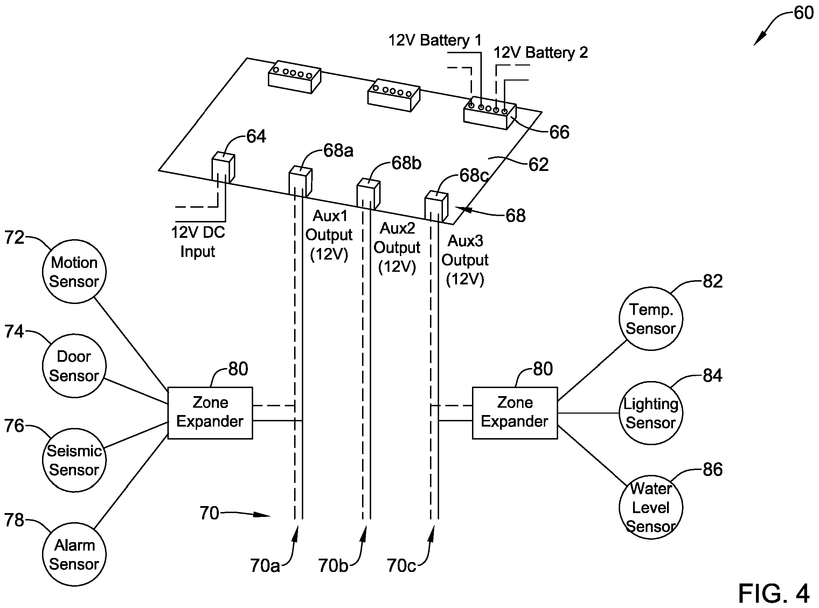

Figure 4 is a schematic block diagram showing an illustrative system 60. The illustrative system 60 includes a security control panel 62. The security control panel 62 includes a main power input 64 that is configured to receive a main power supply at 12 volts. The security control panel 62 includes a backup power input 66 that is configured to receive a first backup power supply at 12 volts and a second backup power supply at 12 volts. The security control panel 62 includes several power outputs 68, including an AUX 1 power output 68a, an AUX 2 power output 68b and an AUX 3 power output 68c. While not shown, the security control panel 62 may include the controller 26 and the UI 28 that allows a user to designated which power outputs 68 are designated as receiving main power only, and which power outputs 68 are designated as also receiving backup power when the main power is not available. Each of the power outputs 68 are operably coupled with pairs of power lines 70, including a pair of power lines 70a operably coupled with the power output 68a, a pair of power lines 70b operably coupled with the power output 68b and a pair of power lines 70c operably coupled with the power output 68c.

As an example, the AUX 1 power output 68a may be designated as receiving main when main power is available and receiving backup power when main power is not available. The AUX 3 power output 68c may be designated as receiving main power when main power is available and not receiving backup power when main power is not available. A number of security devices such as a motion sensor 72, a door sensor 74, a seismic sensor 76 and an alarm siren 78 are operably coupled to the pair of power lines 70a and hence the AUX 1 power output 68a via a zone expander 80. In some instances, the security devices may be directly coupled to the pair of power lines 70a or directly to the AUX 1 power output 68a. Several other devices, including a temperature sensor 82, a lighting sensor 84 and a water level sensor 86 are operably coupled to the pair of power lines 70c and hence the AUX 3 power output 68c via another zone expander 80. In some instances, the devices 82, 84 and 86 may be directly coupled to the pair of power lines 70c or directly to the AUX 3 power output 68c.

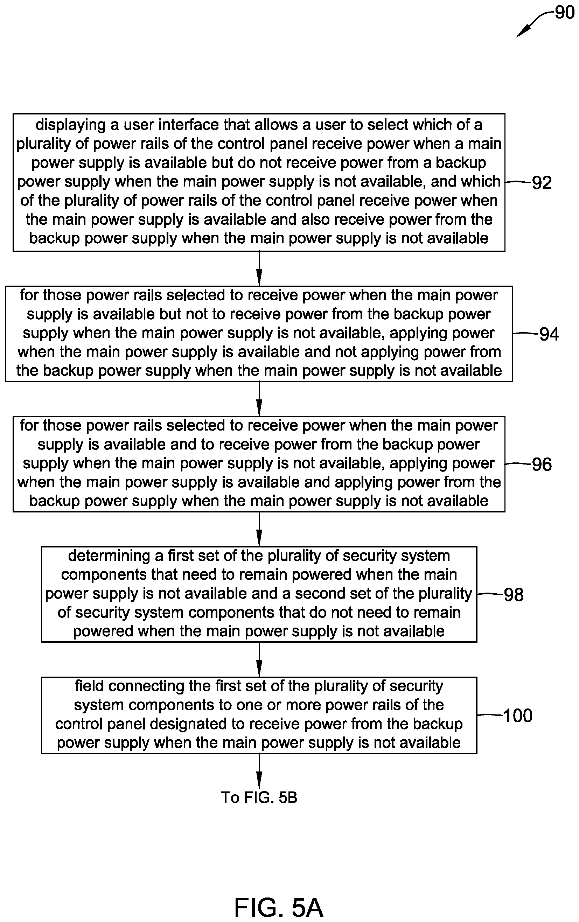

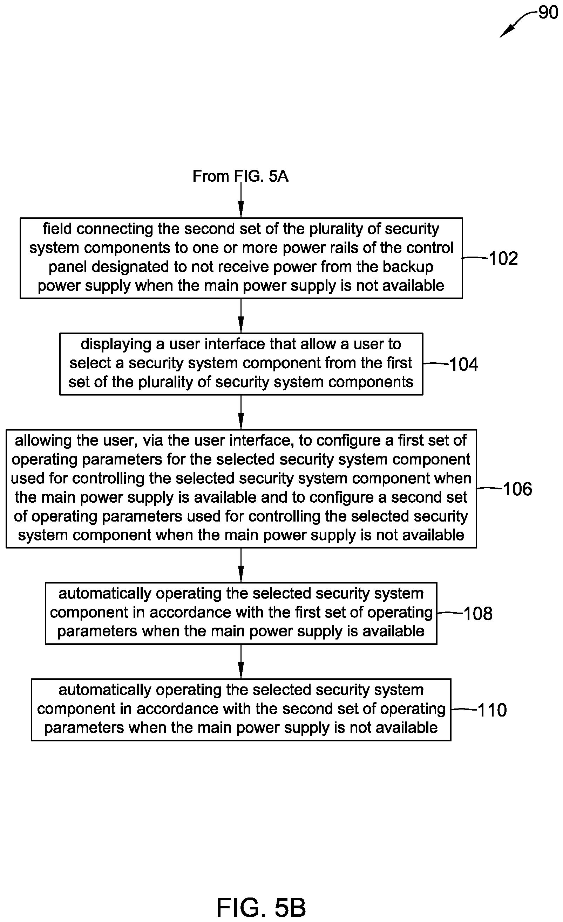

Figures 5A and 5B are flow diagrams that together show an illustrative method 90 of configuring a security system that includes a control panel (such as the control panel 12) and a plurality of security system components (such as the external devices 14). The method 90 includes displaying a user interface that allows a user to select which of a plurality of power rails (e.g. power outputs) of the control panel receive power when a main power supply is available but do not receive power from a backup power supply when the main power supply is not available, and which of the plurality of power rails of the control panel receive power when the main power supply is available and also receive power from the backup power supply when the main power supply is not available, as indicated at block 92. For those power rails selected to receive power when the main power supply is available but not to receive power from the backup power supply when the main power supply is not available, applying power when the main power supply is available and not applying power from the backup power supply when the main power supply is not available, as indicated at block 94. For those power rails selected to receive power when the main power supply is available and to receive power from the backup power supply when the main power supply is not available, applying power when the main power supply is available and applying power from the backup power supply when the main power supply is not available, as indicated at block 96.

The method 90 includes determining a first set of the plurality of security system components that need to remain powered when the main power supply is not available and a second set of the plurality of security system components that do not need to remain powered when the main power supply is not available, as indicated at block 98. As an example, the first set of the plurality of security system components may include one or more components deemed to be critical to the operation of the security system, such as a control panel, a motion sensor, a door sensor, a window sensor, a seismic sensor and an alarm siren. The second set of the plurality of security system components may include one or more components deemed to be non-critical to the operation of the security system, such as a temperature sensor, a lighting sensor and a water level sensor. The first set of the plurality of security system components are field-connected to one or more power rails of the control panel designated by the user to receive power from the backup power supply when the main power supply is not available, as indicated at block 100. Continuing on Figure 5B, the method 90 includes field connecting the second set of the plurality of security system components to one or more power rails of the control panel designated by the user to not receive power from the backup power supply when the main power supply is not available, as indicated at block 102.

In some instances, the method 90 may further include displaying a user interface that allow a user to select a security system component from the first set of the plurality of security system components, as indicated at block 104. The user may be allowed, via the user interface, to configure a first set of operating parameters for the selected security system component used for controlling the selected security system component when the main power supply is available and to configure a second set of operating parameters used for controlling the selected security system component when the main power supply is not available, as indicated at block 106. In some instances, the method 90 may include automatically operating the selected security system component in accordance with the first set of operating parameters when the main power supply is available, as indicated at block 108, and automatically operating the selected security system component in accordance with the second set of operating parameters when the main power supply is not available, as indicated at block 110.

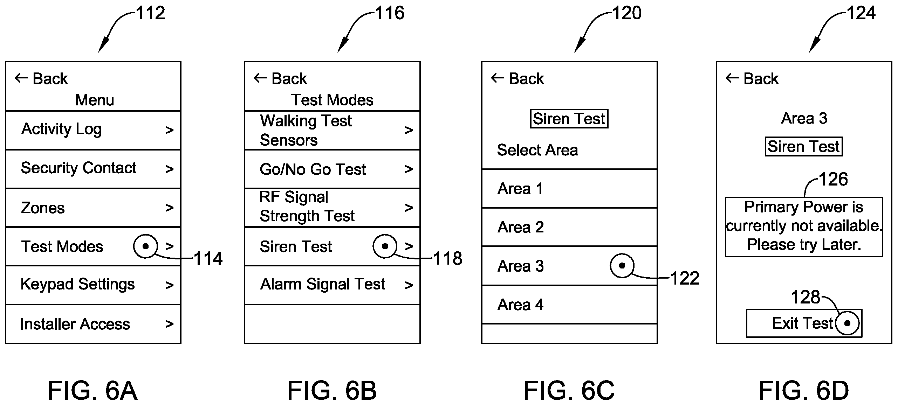

In some instances, the controller 26 may be configured to limit or even prevent a user from performing certain diagnostic tests or maintenance tasks when main power is not available, even if the device or devices in question are powered by one of the power outputs 24 that are designated to receive backup power when main power is not available. An illustrative example is a siren test, which involves sounding a siren to confirm that the siren will function when a possible alarm or other emergency will necessitate use of the siren. Figures 6A through 6D are screen captures that illustrate steps of requesting a siren test that is not permitted while on backup power.

Figure 6A shows a screen 112 that the controller 26 may generate and display on the Ul 28. Among the listed options is a Test Modes option 114. Selecting the Test Modes option 114 causes the controller 26 to generate and display a screen 116, as seen in Figure 6B. The screen 116 displays a listing of possible test modes, one of which is a Siren Test mode 118. Selecting the Siren Test mode 118 causes the controller 26 to generate and display a screen 120, as seen in Figure 6C. The screen 120 includes a number of options for the user to select from, including in which area or zone they desire to perform a siren test, including an Area 3 option 122. Selecting the Area 3 option 122 causes the controller 26 to generate and display a screen 124, as seen in Figure 6D. The screen 124 confirms the selected area, and includes a message ribbon 126 informing the user that the test is not available because main power is not currently available to the siren in area 3. The screen 124 also provides an Exit Test button 128 that allows the user to exit the menu. Other example diagnostic tests or maintenance tasks that may be disabled when the main power is not available and operating under backup power include a Walk Test, an RF Signal Strength Test, and an Alarm Signal Test such as shown in Figure 6B. However, these are just examples.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A control panel comprising:
a main power input for receiving main power from a main power supply;
a backup power input for receiving backup power from a backup power supply;
a plurality of power outputs for powering one or more external devices that are external to the control panel;
a controller operatively coupled to the main power input, the backup power input and the plurality of power outputs, wherein the controller is configured to:
receive a user assigned state for each of one or more of the plurality of power outputs, wherein the user assigned state is one of:
a first state where the corresponding power output provides main power received at the main power input when the main power is available and provides backup power received at the backup power input when the main power is not available;
a second state where the corresponding power output provides main power received at the main power input when the main power is available but not provide backup power received at the backup power input when the main power is not available; and
control the one or more of the plurality of power outputs according to the corresponding user assigned state.

2. The control panel of claim 1, wherein the controller is configured to:
receive an updated user assigned state for a selected one of the plurality of power outputs; and
control the selected one of the plurality of power outputs according to the updated user assigned state.

3. The control panel of claim 1, wherein the controller receives the user assigned state for each of one or more of the plurality of power outputs via a user interface.

4. The control panel of claim 3, wherein the user interface is part of the control panel.

5. The control panel of claim 3, wherein the user interface is external to the control panel but is in operative communication with the control panel.

6. The control panel of claim 1, wherein the controller receives the user assigned state from a remote device over a network.

7. The control panel of claim 1, where each of the plurality of power outputs comprises one or more wire connectors for connecting the corresponding one of the plurality of power outputs with one or more power supply wires corresponding to one or more of the external devices.

8. The control panel of claim 7, wherein the power supply wires of a selected one of the external devices are connected to a selected one of the plurality of power outputs of the control panel in accordance with a desired user assigned state of the selected one of the plurality of power outputs for the selected one of the external devices.

9. The control panel of claim 7, wherein each of the plurality of power outputs comprises a power rail that carries the corresponding one or more wire connectors.

10. The control panel of claim 1, wherein the control panel comprises one of:
a security system control panel; and
a smart power supply panel.

11. The control panel of claim 1, wherein the controller is configured to:
automatically enable one or more maintenance and/or test functions of the control panel when the main power is available; and
automatically disable one or more of the maintenance and/or test functions when the main power is not available.

12. The control panel of claim 1, wherein the controller is configured to:
automatically set a backlight intensity setting and/or a volume setting to a first state when the main power is available; and
automatically set the backlight intensity setting and/or the volume setting to a second state when the main power is not available, wherein the second state draws less power than the first state.

13. A method of configuring a security system that includes a control panel and a plurality of security system components, the method comprising:
displaying a user interface that allows a user to select which of a plurality of power rails of the control panel receive power when a main power supply is available but do not receive power from a backup power supply when the main power supply is not available, and which of the plurality of power rails of the control panel receive power when the main power supply is available and also receive power from the backup power supply when the main power supply is not available;
for those power rails selected to receive power when the main power supply is available but not to receive power from the backup power supply when the main power supply is not available, applying power when the main power supply is available and not applying power from the backup power supply when the main power supply is not available;
for those power rails selected to receive power when the main power supply is available and to receive power from the backup power supply when the main power supply is not available, applying power when the main power supply is available and applying power from the backup power supply when the main power supply is not available;
determining a first set of the plurality of security system components that need to remain powered when the main power supply is not available and a second set of the plurality of security system components that do not need to remain powered when the main power supply is not available;
field connecting the first set of the plurality of security system components to one or more power rails of the control panel designated to receive power from the backup power supply when the main power supply is not available; and
field connecting the second set of the plurality of security system components to one or more power rails of the control panel designated to not receive power from the backup power supply when the main power supply is not available.

14. The method of claim 13, wherein:
the first set of the plurality of security system components include one or more of a motion sensor, a door sensor, a window sensor, a seismic sensor and an alarm siren; and
the second set of the plurality of security system components include one or more of a temperature sensor, a lighting sensor and a water level sensor.

15. The method of claim 13, further comprising:
displaying a user interface that allow a user to select a security system component from the first set of the plurality of security system components;
allowing the user, via the user interface, to configure a first set of operating parameters for the selected security system component used for controlling the selected security system component when the main power supply is available and to configure a second set of operating parameters used for controlling the selected security system component when the main power supply is not available;
automatically operating the selected security system component in accordance with the first set of operating parameters when the main power supply is available; and
automatically operating the selected security system component in accordance with the second set of operating parameters when the main power supply is not available.
